# EUROPÄISCHE PATENTSCHRIFT

(11) **EP 3 449 616 B1**
(45) Veröffentlichungstag und Bekanntmachung des Hinweises auf die Patenterteilung: **19.06.2019**
(21) Anmeldenummer: 17746440.1
(22) Anmeldetag: 24.07.2017
(51) Int. Cl.: H04B 1/38, H04L 29/08

(54) **KRAFTFAHRZEUG MIT ZWEI MODEMS VERSCHIEDENER LTE-KATEGORIEN**
MOTOR VEHICLE HAVING TWO MODEMS OF DIFFERENT LTE CATEGORIES
VÉHICULE AUTOMOBILE DOTÉ DE DEUX MODEMS DE DIFFÉRENTES CATÉGORIES DE LTE

(30) Priorität: 10.08.2016 DE 102016214910
(43) Veröffentlichungstag der Anmeldung: 06.03.2019
(73) Patentinhaber: Audi AG, 85045 Ingolstadt (DE)
(72) Erfinder: EHRENTRAUT, Herbert, 92339 Beilngries (DE); PLECHINGER, Jörg, 80469 München (DE)
(86) Internationale Anmeldenummer: PCT/EP2017/068678
(87) Internationale Veröffentlichungsnummer: WO 2018/028977

(56) Entgegenhaltungen:
- US-A1- 2012 207 021
- US-A1- 2016 205 628
- US-A1- 2016 219 576
- US-A1- 2016 316 358
- US-A1- 2017 142 204

## Beschreibung

Die Erfindung betrifft eine Mobilfunkvorrichtung für ein Kraftfahrzeug. Mittels der Mobilfunkvorrichtung kann eine Funkverbindung zu einem Mobilfunknetzwerk bereitgestellt oder aufgebaut werden. Zum Übertragen von Daten ist eine Basismodemschaltung vorgesehen, zum Beispiel für eine Übertragung gemäß dem Standard LTE (Long Term Evolution) der Kategorie 4 (CAT-4) oder höher (CAT-5, CAT-6,...). Zu der Erfindung gehört auch ein Verfahren zum Betreiben der Mobilfunkvorrichtung. Eine Kurzbezeichnung für eine Modemschaltung ist Modem (Modulation-Demodulation).

Mittels der Modemschaltung einer Mobilfunkvorrichtung wird die Übertragung von digitalen Daten, also Bits oder Bitfolgen, über eine Funkverbindung ermöglicht, indem die Daten auf ein Trägersignal, das eine festgelegte Trägerfrequenz aufweist, beim Senden durch Modulation aufgeprägt bzw. beim Empfang daraus durch Demodulation extrahiert werden. Je nach Ausgestaltung der Modemschaltung ergibt sich eine andere Übertragungsrate bei der Übertragung der digitalen Daten. Durch die Modemschaltung ist zum Beispiel festgelegt, in welcher Form die digitalen Daten über eine Quadratur-Amplituden-Modulation (QAM) übertragen werden und/oder wie viele Kanäle unterschiedlicher Trägerfrequenz für die Übertragung gebündelt werden können. Eine Beschreibung einer solchen Modemschaltung ist zum Beispiel aus der KR20090061224A bekannt.

Da der Betrieb von Modemschaltungen elektrische Energie benötigt, werden sie bei geparkten Kraftfahrzeugen in der Regel abgeschaltet. Hierdurch ist aber das Kraftfahrzeug zum Beispiel für ein Software-Update von Steuergeräten des Kraftfahrzeugs nicht mehr von außen über eine Funkverbindung erreichbar. Aus der KR20160046191A ist hierzu bekannt, eine Modemschaltung im geparkten Zustand eines Kraftfahrzeugs in Abhängigkeit vom Zustand der Fahrzeugbatterie weiter zu betreiben.

Aus der KR20070006139A ist bekannt, eine Modemschaltung zyklisch zu aktivieren, während einen Verbrennungsmotor eines Kraftfahrzeugs ausgeschaltet ist. Hierdurch kann in vorbestimmten Zeitabständen wieder eine Funkverbindung zu dem Kraftfahrzeug hergestellt werden.

Bei einer schwachen Funkverbindung kann eine Basisstation an eine Mobilfunkvorrichtung ein Steuersignal übermitteln, durch welches die Mobilfunkvorrichtung ihr Sendesignal verstärkt, was auch die Sendereichweite vergrößert.

Aus der US 2015/0222553 A1 ist ein Verfahren bekannt, um Mobilfunkdaten zu einem Kraftfahrzeug hin über unterschiedliche Datenkanäle zu übertragen. Die zu übertragenden Daten werden mittels eines sogenannten Traffic-Shaping auf die unterschiedlichen Kanäle aufgeteilt, um die Daten, welche die höchste Übertragungsrate benötigen, nicht durch niederpriore Daten zu blockieren. Die unterschiedlichen Kanäle können bereitgestellt werden, indem gleichzeitig unterschiedliche Funkverbindungen bereitgestellt werden oder in einer bestehenden Funkverbindung mehrere Kanäle reserviert werden.

Aus der US 2007/0190950 A1 ist ein Verfahren bekannt, um über einen Sprachkanal einer Mobilfunkverbindung sowohl Sprache als auch Daten übertragen zu können, damit in einem Callcenter während eines Anrufs auch Gerätedaten übertragen werden können. Um eine möglichst große Bandbreite für den genutzten Sprachkanal zu erhalten, werden entsprechende Kontrollbits beim Aufbau der Mobilfunkverbindung gesetzt. Die Datenrate wird für eine bestehende Funkverbindung festgelegt, die vorausgesetzt wird, um überhaupt den Sprachkanal aufzubauen. Die Datenrate wird dadurch verändert, indem die Sprachkodierung angepasst wird.

Aus der US 2016/0219576 A1 ist bekannt, dass ein mobiles Endgerät zwischen unterschiedlichen Übertragungskategorien für eine Mobilfunkverbindung umschalten kann und dies in Abhängigkeit davon tut, welcher Typ von Daten zu übertragen ist.

Aus der US 2016/0205628 A1 ist ein diskontinuierliches Empfangsverfahren zwischen mobilem Endgerät und Basisstation bekannt, welches in Abhängigkeit von verschiedenen Faktoren, wie zum Beispiel Ladestatus einer Batterie des mobilen Endgerätes oder der Bewegungsgeschwindigkeit des mobilen Endgerätes, von der Basisstation aus gesteuert wird.

Aus der US 2012/0207021 A1 ist ein Verfahren bekannt, mittels dessen die Übertragung von Datenvolumina auf mehrere Kanäle oder Frequenzbänder in Abhängigkeit von Betriebszuständen des empfangenden Geräts aufgeteilt wird.

Der Erfindung liegt die Aufgabe zugrunde, eine Mobilfunkvorrichtung in einem Kraftfahrzeug an die verfügbare elektrische Leistung und/oder an die Verhältnisse der Funkstrecke anpassen zu können.

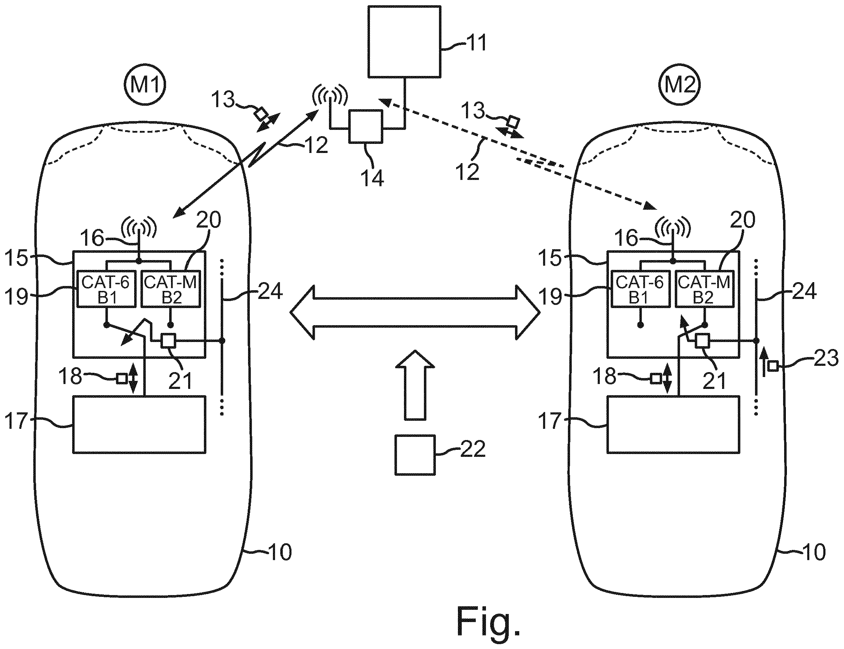

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figur beschrieben.

Durch die Erfindung ist eine Mobilfunkvorrichtung für ein Kraftfahrzeug bereitgestellt. Die Mobilfunkvorrichtung ist dazu eingerichtet, eine Funkverbindung zu einem Mobilfunknetzwerk bereitzustellen. Dies kann in an sich bekannter Weise zum einen durch den Betrieb einer Antenne mittels eines Senders und eines Empfängers und/oder zum anderen durch den Betrieb eines sogenannten Protokollstacks, zum Beispiel eines LTE-Protokollstacks, zum Verwalten einer Mobilfunkverbindung durchgeführt werden. Um Daten zwischen der Antenne und dem Protokollstack zu übertragen, ist beim Senden die Modulation und bei Empfangen die Demodulation nötig, um das Basisband, in welchen die digitalen Daten (beim Senden) bereitgestellt oder (nach dem Empfangen) benötigt werden, mit der Trägerfrequenz des Mobilfunkkanals zu koppeln. Hierzu ist eine Steuereinrichtung der Mobilfunkvorrichtung dazu eingerichtet, in einem Basismodus die Daten mittels einer Basismodemschaltung der Mobilfunkvorrichtung über die Mobilfunkverbindung zu senden und/oder zu empfangen. Die Basismodemschaltung stellt ein Modem dar. Die Basismodemschaltung ist derart ausgestaltet, dass sie als Übertragungsrate für die Übertragung über die Funkverbindung eine vorbestimmte Basisbitrate bereitstellt.

Je größer die Basisbitrate ist, desto größer ist aber der Schaltungsaufwand oder die Schaltungskomplexität einer solchen Basismodemschaltung. Entsprechend ist auch der Bedarf an elektrischer Energie oder elektrischer Leistung für das Übertragen von Daten bei einer Basismodemschaltung größer, je größer ihre Übertragungsrate ist.

Um nun den Energiebedarf z.B. im Parkbetrieb eines Kraftfahrzeugs zu verringern, ist erfindungsgemäß vorgesehen, dass die Mobilfunkvorrichtung ein weiteres Modem, nämlich eine Zusatzmodemschaltung aufweist, die als Übertragungsrate für die Übertragen von Daten über die Funkverbindung eine Niedrigbitrate bereitstellt, die kleiner als die besagte Basisbitrate der genannten Basismodemschaltung ist. So kann vorgesehen sein, dass die Niedrigbitrate des Zusatzmodus kleiner als die Hälfte, insbesondere kleiner als 10 Prozent, der besagten Basisbitrate für den Basismodus ist.

Die Steuereinrichtung der Mobilfunkvorrichtung ist nun dazu eingerichtet, zumindest ein vorbestimmtes Wechselereignis zu erkennen und bei erkanntem Wechselereignis von dem Basismodus in einen Zusatzmodus zu wechseln, in welchem die Steuereinrichtung Daten mittels der Zusatzmodemschaltung sendet und/oder empfängt. Anstelle der Basismodemschaltung, wie sie im Basismodus verwendet wird, wird also im Zusatzmodus die Zusatzmodemschaltung verwendet, um Daten zu übertragen (Senden und/oder Empfangen).

Erfindungsgemäß ist die Steuereinrichtung dazu eingerichtet, als Wechselereignis zu erkennen, dass das Kraftfahrzeug geparkt ist. Dies wird an einem Zündung-aus-Signal erkannt, welches durch die Mobilfunkvorrichtung in dem Kraftfahrzeug zum Beispiel über einen Kommunikationsbus, zum Beispiel einen CAN-Bus (CAN - Controller Area Network) empfangen werden kann. Es ist vorgesehen, dass nach dem Empfangen des Zündung-aus-Signals eine vorbestimmte Mindestzeitdauer ohne Zündungssignal erkannt werden muss, damit von dem Basismodus in den Zusatzmodus gewechselt wird. Im Parkbetrieb des Kraftfahrzeugs kann dann mittels der Zusatzmodemschaltung weiterhin eine Mobilfunkverbindung zu dem Kraftfahrzeug aufgebaut werden, um zum Beispiel ein Telematiksignal oder eine GPS-Position des Kraftfahrzeugs (GPS - Global positioning system) aus dem Kraftfahrzeug zu empfangen und/oder eine Fernwartung eines Steuergeräts des Kraftfahrzeugs durchzuführen, z.B. ein Software-Update.

Die Zusatzmodemschaltung kann zum Beispiel als zusätzlicher oder separater Chipsatz neben der eigentlichen Basismodemschaltung bereitgestellt sein. Die Basismodemschaltung und die Zusatzmodemschaltung können auch durch einen gemeinsamen integrierten Schaltkreis (IC - Integrated circuit) bereitgestellt sein. Als Basismodemschaltung und Zusatzmodemschaltung kann auch eine einzige, gemeinsame Modemschaltung bereitgestellt sein, also eine gemeinsame Hardware, die mittels Konfigurationsdaten und/oder mittels einer Betriebssoftware abwechselnd im Basismodus und im Zusatzmodus betrieben wird. Somit ergibt eine aktuelle Konfiguration und/oder Programmierung der Modemschaltung jeweils die Basismodemschaltung und die Zusatzmodemschaltung. Ein Energiebedarf der Zusatzmodemschaltung für die Übertragung einer vorbestimmten Datenmenge ist kleiner als ein Energiebedarf der Basismodemschaltung für die Übertragung derselben Datenmenge. Grund dafür ist, dass eine niedrigere Übertragungsrate verwendet wird. So kann beispielsweise durch Verwendung einer weniger aufwendigen oder einfacheren Quadratur-Amplituden-Modulation oder durch gänzlichen Verzicht darauf der Energiebedarf gesenkt werden. So kann beispielsweise für den Basismodus mittels der Basismodemschaltung eine 64-QAM vorgesehen sein, während für den Zusatzmodus mittels der Zusatzmodemschaltung auf die Quadratur-Amplituden-Modulation verzichtet werden kann.

Durch die Erfindung ergibt sich der Vorteil, dass in der Mobilfunkvorrichtung bei ansonsten gleichem Aufbau durch Bereitstellen der Zusatzmodemschaltung der Sendebetrieb und/oder der Empfangsbetrieb mit geringerem elektrischen Leistungsbedarf auch zum Beispiel in einer Parkphase eines Kraftfahrzeugs fortgeführt werden kann.

Um die Kombination aus Basismodemschaltung und Zusatzmodemschaltung bereitzustellen, ist vorgesehen, dass die Basismodemschaltung und die Zusatzmodemschaltung jeweils LTE-Modemschaltungen unterschiedlicher Performanzkategorie sind. LTE-Modemschaltungen sind in die Kategorien CAT-0 bis CAT-8 eingeteilt. Zusätzlich gibt es M-Kategorien und NB-Kategorien für Geräte, die im sogenannten Internet-of-Things (IOT) betrieben werden sollen. Die Performanzkategorien können z.B. beim 3rd Generation Partnership Project (3GPP) in Erfahrung gebracht werden.

Hierbei ist die zur Verfügung gestellte Übertragungsrate größer, je größer die Ordnungsnummer der Kategorie ist. Der Erfindung liegt nun die Erkenntnis zu Grunde, dass mit der Ordnungsnummer der Kategorie auch der Energiebedarf oder Leistungsbedarf der entsprechenden Modemschaltung steigt.

Durch Kombinieren von Modemschaltungen mit unterschiedlicher Performanzkategorie können also der Basismodus und der Zusatzmodus bereitgestellt werden.

Es ist vorgesehen, dass die Performanzkategorie der Basismodemschaltung größer CAT-3 ist, also z.B. CAT-4 oder CAT-5 oder größer ist. Im Normalbetrieb kann somit die Übertragung der Daten über einer LTE-Verbindung mit einer Übertragungsrate von 100 Mbit/s (Megabit pro Sekunde) für den Downlink (Empfangen) und größer ermöglicht werden. In Bezug auf die Zusatzmodemschaltung ist vorgesehen, dass es sich um eine Performanzkategorie CAT-1 oder CAT-0 oder eine der Kategorien zur Unterstützung von Machine Type Communication (Maschine-zu-Maschine-Kommunikation) handelt (z.B. CAT-M, CAT-M1, CAT-M0 oder IEEE802.11ah). Insbesondere ist eine NB-IOT-Technologie (z.B. CAT-NB oder CAT-NB1) vorgesehen. Im Zusatzmodus kann hierdurch ein Leistungsbedarf im Vergleich zum Basismodus gedrosselt werden kann.

Zu der Erfindung gehören auch vorteilhafte Weiterbildungen, durch deren Merkmale sich zusätzliche Vorteile ergeben.

Bevorzugt ist vorgesehen, dass eine Nutzbandbreite der Zusatzmodemschaltung kleiner als eine Nutzbandbreite der Basismodemschaltung ist. Hierdurch ist die Störanfälligkeit bei der Übertragung der Daten im Zusatzmodus verringert. Des Weiteren kann durch Verringerung der Nutzbandbreite auch eine Reichweite vergrößert werden, sodass zum Beispiel auch ein Kraftfahrzeug, welches sich zum Beispiel in einer Tiefgarage befindet, noch von einem Mobilfunknetzwerk aus über eine Funkverbindung erreicht werden kann.

Bevorzugt ist vorgesehen, dass bei der Zusatzmodemschaltung eine Frequenzspreizung vorgesehen ist, die größer ist als eine Frequenzspreizung bei der Basismodemschaltung. Hierdurch ist die Störanfälligkeit auch bei vergrößerter Reichweite der Mobilfunkverbindung verringert. Die besagte Nutzbandbreite ist die verwendete Bandbreite vor der Frequenzspreizung. Allgemein ist bevorzugt vorgesehen, dass in dem Zusatzmodus zusätzlich oder alternativ zur Frequenzspreizung ein Modulationsverfahren und/oder eine Vorwärtsfehlerkorrektur (FEC - Forward error correction) und/oder ein ARQ-Protokoll (ARQ - Automatic repeat request) anders ist als im Basismodus und hierdurch im Zusatzmodus eine Sendereichweite und/oder eine Leistungsübertragungsbilanz größer ist als im Basismodus. Die größere Sendereichweite zeichnet sich insbesondere dadurch aus, dass sich bei gleichbleibendem Umgebungsrauschen ein vorbestimmtes SNR (Signal-zu-Rauschverhältnis) und/oder eine vorbestimmte Fehlübertragungsrate im Zusatzmodus in einer größeren Entfernung zum Kraftfahrzeug ergibt als im Basismodus. Die Leistungsübertragungsbilanz wird auch als "Link Budget" bezeichnet. Das Link-Budget ist ein Kriterium, das man insbesondere mittels der Performanzkategorie M (Cat. M oder CAT-M) und auch mittels der NBlOT-Technologie (NB-IOT - Narrowband Internet-of-Things) verbessern kann.
Der Wechsel von dem Basismodus in den Zusatzmodus erfolgt in der besagten Weise in Abhängigkeit von einem Wechselereignis, das durch die Steuereinrichtung erkannt oder detektiert wird. Zum Wechseln vom Basismodus in den Zusatzmodus kann die Mobilfunkvorrichtung von dem Mobilfunknetzwerk abgemeldet werden, die Zusatzmodelschaltung aktiviert werden, ein Protokollstack für die Datenübertragung gemäß der vorgesehenen Performanzkategorie als Software-Protokollstack geladen werden und dann die Mobilfunkvorrichtung über die Zusatzmodelschaltung wieder bei dem Mobilfunknetzwerk angemeldet werden.

Eine Ausführungsform sieht vor, dass die Steuereinrichtung dazu eingerichtet ist, als Wechselereignis zu erkennen, dass für mehr als eine vorbestimmte Mindestzeitdauer eine Übertragung von Nutzdaten über die Funkverbindung ausgeblieben ist. Falls also bis auf die an sich bekannten Kontrolldaten oder Steuerdaten zum Verwalten der Funkverbindung selbst keine Nutzdaten, also z.B. Sprachdaten oder Internetdaten, für z.B. eine andere Fahrzeugkomponente über die Funkverbindung übertragen werden, so kann vorgesehen sein, dass die Steuereinrichtung in den Zusatzmodus wechselt. Hierdurch bleibt in vorteilhafter Weise die Mobilfunkvorrichtung weiterhin mit einem Mobilfunknetzwerks verbunden, ohne dass hierbei der Energiebedarf oder Leistungsbedarf benötigt wird, wie er zum Betrieb der Basismodemschaltung notwendig ist. Die Basismodemschaltung kann stromlos geschaltet oder abgeschaltet werden, da die Datenübertragung über die Zusatzmodemschaltung erfolgt.

Die Steuereinrichtung ist gemäß einer Weiterbildung dazu eingerichtet, als Wechselereignis zu erkennen, dass ein Notrufsignal signalisiert, dass ein automatischer Notruf über die Funkverbindung ausgesendet werden soll. Dieser Mechanismus wird auch als eCALL bezeichnet. Für den Fall, dass ein automatischer Notruf ausgesendet werden soll, ist es vorteilhaft, die größere Reichweite einer Zusatzmodemschaltung zu nutzen, die zwar eine geringere Übertragungsrate (nämlich die Niedrigbitrate) aufweist, dafür aber zum Beispiel eine geringere Nutzbandbreite und/oder größere Frequenzspreizung vorsehen kann, sodass hierdurch die Reichweite und/oder die Robustheit gegen Störungen der Funkverbindung im Vergleich zum Basismodus vergrößert ist.

Gemäß einer Weiterbildung ist die Steuereinrichtung dazu eingerichtet, als Wechselereignis zu erkennen, dass ein Verbindungsfehlersignal, welches eine unterbrochene Funkverbindung oder einen erfolglosen Verbindungsaufbau der Funkverbindung signalisiert, ein vorbestimmtes Abbruchkriterium erfüllt. Das Verbindungsfehlersignal ist an sich aus dem Stand der Technik als Radio-Link-Failure (RLF) bekannt. Es kann durch die Mobilfunkrichtung selbst generiert werden, falls einer der beschriebenen Fehler vorliegt. Das Abbruchkriterium kann dabei zum Beispiel besagen, dass das Verbindungsfehlersignal innerhalb eines vorbestimmten Zeitraums öfter als eine vorbestimmte Höchstanzahl erzeugt worden ist. Falls also mittels der Basismodemschaltung für die größere Übertragungsrate (nämlich die Basisbitrate) die Funkverbindung nicht zuverlässig betrieben werden kann, wird in den Zusatzmodus gewechselt, in welchem eine geringere Übertragungsrate, nämlich die Niedrigbitrate, verwendet wird, wodurch sich auch eine robustere Mobilfunkverbindung ergibt.

Ein weiteres Wechselereignis, das durch die Steuereinrichtung in dem Kraftfahrzeug erkannt werden kann, kann sein, dass eine Fahrgeschwindigkeit des Kraftfahrzeugs für mehr als eine vorbestimmte Mindestzeitdauer größer als ein vorbestimmter Schwellenwert ist. Falls das Kraftfahrzeug also schneller als die Geschwindigkeit, die durch den Schwellenwert beschrieben ist, fährt, wird mittels der Zusatzmodemschaltung die Mobilfunkverbindung mit einer geringeren Übertragungsrate betrieben, wodurch sie auch robuster gegen z.B. den Dopplereffekt ist. Der Schwellenwert kann z.B. in einem Bereich größer als 150 km/h liegen.

Durch den Betrieb der erfindungsgemäßen Mobilfunkvorrichtung ergibt sich das erfindungsgemäße Verfahren. Durch die erfindungsgemäße Mobilfunkvorrichtung wird eine Funkverbindung in an sich bekannter Weise zu einem Mobilfunknetzwerk bereitgestellt. Um nun Daten zu übertragen, sendet und/oder empfängt die Steuereinrichtung der Mobilfunkvorrichtung über die Funkverbindung in einem Basismodus die Daten mittels einer Basismodemschaltung mit einer vorbestimmten Basisbitrate. Falls die Steuereinrichtung zumindest ein vorbestimmtes Wechselereignis erkennt, wechselt sie bei erkanntem Wechselereignis von dem Basismodus in den Zusatzmodus, in welchem die Steuereinrichtung Daten über die Funkverbindung nicht mittels der Basismodemschaltung, sondern mittels der Zusatzmodemschaltung mit der Niedrigbitrate, die kleiner als die Basisbitrate ist, sendet und/oder empfängt. Somit wird in Abhängigkeit von zumindest einem Wechselereignis mit unterschiedlichen Übertragungsraten übertragen, wozu in der Mobilfunkvorrichtung zwei unterschiedliche Modemschaltungen bereitgestellt sind.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Mobilfunkvorrichtung beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschreiben. Hierzu zeigt die einzige Figur (Fig.) eine schematische Darstellung einer Ausführungsform der erfindungsgemäßen Mobilfunkvorrichtung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Die Figur zeigt ein Kraftfahrzeug 10 in zwei unterschiedlichen Betriebsmodi, nämlich in einem Basismodus M1 und einem Zusatzmodus M2. Das Kraftfahrzeug 10 kann mit einem Mobilfunknetzwerk 11 eine Mobilfunkverbindung oder kurz Funkverbindung 12 zum Übertragen von Daten 13 aufbauen. Die Funkverbindung 12 kann zwischen einer Basisstation 14 des Mobilfunknetzwerks 11 und einer Mobilfunkvorrichtung 15 des Kraftfahrzeugs 10 bereitgestellt sein. Durch die Mobilfunkvorrichtung 15 können eine Antenne 16 und ein Steuergerät 17 des Kraftfahrzeugs gekoppelt sein. Das Steuergerät 17 kann zum Beispiel Bestandteil eines Infotainmentsystems (Information-Unterhaltungssystem) sein. Das Steuergerät 17 kann Nutzdaten 18 mittels der Mobilfunkvorrichtung 15 mit dem Mobilfunknetzwerk 11 austauschen, d.h. Nutzdaten 18 zumindest teilweise aussenden und/oder empfangen. Die Nutzdaten 18 sind Teil der Daten 13.

Die Mobilfunkvorrichtung 15 kann zum Modulieren von zu sendenden Daten 13 und/oder zum Demodulieren von empfangenen Daten 13 zwei Modemschaltungen aufweisen, die abwechselnd betrieben werden können: Eine Basismodemschaltung 19 kann im Basismodus M1 verwendet werden, eine Zusatzmodemschaltung 20 kann im Zusatzmodus M2 betrieben werden. Die jeweils andere Modemschaltung 19, 20 kann währenddessen z.B. abgeschaltet sein.

Zwischen den Modemschaltungen 19, 20 kann eine Steuereinrichtung 21 der Mobilfunkvorrichtung 15 umschalten. Bei den Modemschaltungen 19, 20 kann es sich jeweils um einen Chipsatz handeln, wie sie für unterschiedliche Modulationsverfahren an sich im Stand der Technik verfügbar sind. Die beiden Modemschaltungen 19, 20 können auch als ein gemeinsamer integrierter Schaltkreis bereitgestellt sein. Es kann auch eine einzige Modemschaltung vorgesehen sein, die mittels Konfigurationsdaten und/oder mittels einer Betriebssoftware abwechselnd im Basismodus M1 und im Zusatzmodus M2 betrieben wird. Die Steuereinrichtung 21 kann zum Beispiel eine elektronische Schaltung und/oder einen Mikrocontroller umfassen.

Bei der Basismodemschaltung 19 kann es sich zum Beispiel um ein LTE-Modem handeln, dass eine Performanzkategorie in einem Bereich größer als CAT-3 aufweist, also z.B. CAT-4, CAT-5, CAT-6, CAT-7, CAT-8,... oder CAT-16 aufweist. Hierdurch ist eine Übertragungsrate bereitgestellt, die eine Basisbitrate B1 ergibt, wobei die Bitrate B1 größer oder gleich 100 Mbit/s sein kann.

Die Zusatzmodemschaltung 20 kann eine Übertragungsrate entsprechend einer Niedrigbitrate B2 aufweisen, die kleiner als die Basisbitrate B1 ist. Die zu das Basismodemschaltung 20 kann hierzu zum Beispiel die Performanzkategorie CAT-M oder CAT-M1 oder CAT-M0 oder CAT-1 oder CAT-0 gemäß dem LTE-Standard bereitstellen.

Indem die Zusatzmodemschaltung 20 eine M-Kategorie als Performanzkategorie vorsieht, verhält sich das Kraftfahrzeug 10 wie ein Teilnehmer des sogenannten Internet-of-Things. Dies schafft die Möglichkeit, bei längerem Parken die Telematik, also z.B. das Steuergerät 17, des Kraftfahrzeugs 10 dauerhaft laufen zu lassen. Darüber hinaus erhöht die hiermit einhergehende Schmalband-Technologie (die sogenannte Narrowband IOT-Technologie) die Reichweite der Funkverbindung 12, so dass das Kraftfahrzeug 10 auch zum Beispiel in einer Tiefgarage von dem Mobilfunknetzwerks 11 aus erreichbar ist und/oder dieses erreichen kann.

Somit ist die Basismodemschaltung 19 für eine Datenübertragung mit hoher Basisbitrate spezialisiert, wofür sie allerdings auch einen größeren Betriebsstrom und/oder Ruhestrom (Stand-by-Strom) benötigt als die Zusatzmodemschaltung 20. Die Zusatzmodemschaltung 20 kann dagegen eine größere Funkreichweite bereitstellen und zum Beispiel auch die Mobilfunkverbindung 12 bereitstellen, falls das Kraftfahrzeug 10 in einer Tiefgarage abgestellt ist, was mit der Basismodemschaltung 19 nicht möglich wäre. Zudem ist der Betriebsstrom und/oder der Ruhestrom kleiner als im Falle der Basismodemschaltung 19.

Die Steuereinrichtung 21 kann zwischen der Basismodemschaltung 19 und der Zusatzmodemschaltung 20 in Abhängigkeit von einem Wechselereignis 22 umschalten, das durch die Steuereinrichtung 21 erkannt werden kann. Zum Empfangen eines entsprechenden Ereignissignals 23, welches das Wechselereignis 22 signalisieren kann, kann die Steuereinrichtung 21 zum Beispiel an einen Kommunikationsbus 24 des Kraftfahrzeugs 10 angeschlossen sein. Bei den Kommunikationsbus 24 kann es sich zum Beispiel um einen CAN-Bus handeln.

Durch das Ereignissignal 23 kann zum Beispiel signalisiert sein, ob eine Zündung des Kraftfahrzeugs 10 ein und/oder ausgeschaltet ist, ob ein Notruf (eCALL) ausgesendet werden soll und/oder mit welcher Fahrgeschwindigkeit das Kraftfahrzeug 10 fährt. Zusätzlich oder alternativ dazu kann die Steuereinrichtung 21 auch überwachen, seit wann keine Nutzdaten 18 mehr über die Mobilfunkvorrichtung 15 übertragen worden sind. Falls also für eine vorbestimmte Mindestzeitdauer das Senden und/oder Empfangen von Nutzdaten 18 ausgeblieben ist, kann von dem Basismodus M1 in den Zusatzmodus M2 gewechselt werden. Die Mindestzeitdauer kann zum Beispiel mehr als eine Stunde betragen, insbesondere in einem Bereich von einer Stunde bis 48 Stunden liegen. Zusätzlich oder alternativ kann in einer Parkphase des Kraftfahrzeugs in den Zusatzmodus M2 gewechselt werden.

Es kann auch überwacht werden, ob ein Verbindungsfehlersignal der Mobilfunkvorrichtung 15 signalisiert, dass die Mobilfunkverbindung 12 abgebrochen oder unterbrochen ist oder nicht aufgebaut werden konnte. Dann kann ebenfalls in den Zusatzmodus M2 gewechselt werden.

Somit kann bei aktivem Basismodus M1 abhängig von einem externen Träger oder Auslöser, nämlich zum Beispiel dem Ereignissignal 23 oder der Menge der gesendeten Nutzdaten 18 oder dem Verbindungsfehlersignal, das Kraftfahrzeug 10 durch die Mobilfunkvorrichtung 15 von dem Mobilfunknetzwerks 11 abgemeldet oder entkoppelt werden, dann die Mobilfunkvorrichtung 15 umkonfiguriert werden, sodass die Zusatzmodemschaltung 20 aktiviert und ein entsprechender Protokollstack bereitgestellt ist, und anschließend die Funkverbindung 12 wieder mittels der Zusatzmodemschaltung 20 aufgebaut werden, d.h. die Mobilfunkvorrichtung 15 wieder in dem Mobilfunknetz 11 angemeldet werden. Bevorzugt wird dasselbe Mobilfunknetz verwendet.

Falls ein vorbestimmtes Rückwechselereignis erkannt wird, also zum Beispiel das Kraftfahrzeug nach der Parkphase wieder gestartet wird und/oder die Fahrgeschwindigkeit vor eine vorbestimmte Zeitdauer unter den Schwellenwert absinkt und/oder eine vorbestimmte Mindestmenge an Nutzdaten 18 übertragen worden ist, kann wieder zurück von dem Zusatzmodus M2 in den Basismodus M1 gewechselt werden, so das anstelle der Zusatzmodemschaltung 20 wieder die Basismodemschaltung 19 zum Übertragen der Daten 13 verwendet wird. Somit steht wieder die Basisbitrate zur Verfügung.

Insgesamt zeigt das Beispiel, wie durch die Erfindung für eine Mobilfunkvorrichtung ein Low-Power-Standby-Modus als Zusatzmodus bereitgestellt werden kann.

## Patentansprüche

1. Mobilfunkvorrichtung (15) für ein Kraftfahrzeug (10), wobei die Mobilfunkvorrichtung (15) dazu eingerichtet ist, eine Funkverbindung (12) zu einem Mobilfunknetzwerk (11) bereitzustellen, und eine Steuereinrichtung (21) der Mobilfunkvorrichtung (15) dazu eingerichtet ist, über die Funkverbindung (12) in einem Basismodus (M1) Daten (13) mittels einer Basismodemschaltung (19) zu senden und/oder zu empfangen, die eine vorbestimmte Basisbitrate (B1) bereitstellt,
**dadurch gekennzeichnet, dass**
eine Zusatzmodemschaltung (20) vorgesehen ist, die zum Übertragen von Daten (13) über die Funkverbindung (12) eine Niedrigbitrate (B2), die kleiner als die Basisbitrate (B1) ist, bereitstellt, wobei die Steuereinrichtung (21) dazu eingerichtet ist, zumindest ein vorbestimmtes Wechselereignis (22) zu erkennen und bei erkanntem Wechselereignis (22) von dem Basismodus (M1) in einen Zusatzmodus (M2) zu wechseln, in welchem die Steuereinrichtung (21) Daten (13) mittels der Zusatzmodemschaltung (20) sendet und/oder empfängt, wobei die Basismodemschaltung (19) und die Zusatzmodemschaltung (20) jeweils LTE-Modemschaltungen unterschiedlicher Performanzkategorie sind und hierbei die Performanzkategorie der Basismodemschaltung (19) größer als CAT-3 und die Performanzkategorie der Zusatzmodemschaltung (20) CAT-1 oder CAT-0 oder eine der Kategorien zur Unterstützung von Machine Type Communication ist, wobei
die Steuereinrichtung (21) dazu eingerichtet ist, als ein Wechselereignis (22) zu erkennen, dass das Kraftfahrzeug (10) geparkt ist, und dies an einem Zündung-aus-Signal zu erkennen, wobei nach dem Empfangen des Zündung-aus-Signals eine vorbestimmte Mindestzeitdauer ohne Zündungssignal erkannt werden muss, damit von dem Basismodus in den Zusatzmodus gewechselt wird.

2. Mobilfunkvorrichtung (15) nach Anspruch 1, wobei eine Nutzbandbreite der Zusatzmodemschaltung (20) kleiner als eine Nutzbandbreite der Basismodemschaltung (19) ist.

3. Mobilfunkvorrichtung (15) nach einem der vorhergehenden Ansprüche, wobei in dem Zusatzmodus (M2) eine Frequenzspreizung größer und/oder ein Modulationsverfahren und/oder eine Vorwärtsfehlerkorrektur und/oder ein ARQ-Protokoll anders ist als im Basismodus (M1) und hierdurch im Zusatzmodus (M2) eine Sendereichweite und/oder eine Leistungsübertragungsbilanz größer ist als im Basismodus (M1).

4. Mobilfunkvorrichtung (15) nach einem der vorhergehenden Ansprüche, wobei die Steuereinrichtung (21) dazu eingerichtet ist, als ein Wechselereignis (22) zu erkennen, dass für mehr als eine vorbestimmte Mindestzeitdauer eine Übertragung von Nutzdaten (18) über die Funkverbindung (12) ausgeblieben ist.

5. Mobilfunkvorrichtung (15) nach einem der vorhergehenden Ansprüche, wobei die Steuereinrichtung (21) dazu eingerichtet ist, als ein Wechselereignis (22) zu erkennen, dass ein Notrufsignal signalisiert, dass ein automatischer Notruf über die Funkverbindung (12) ausgesendet werden soll.

6. Mobilfunkvorrichtung (15) nach einem der vorhergehenden Ansprüche, wobei die Steuereinrichtung (21) dazu eingerichtet ist, als ein Wechselereignis (22) zu erkennen, dass ein Verbindungsfehlersignal, welches eine unterbrochene Funkverbindung (12) oder einen erfolglosen Verbindungsaufbau signalisiert, ein vorbestimmtes Abbruchkriterium erfüllt.

7. Mobilfunkvorrichtung (15) nach einem der vorhergehenden Ansprüche, wobei die Steuereinrichtung (21) dazu eingerichtet ist, als ein Wechselereignis (22) zu erkennen, dass eine Fahrgeschwindigkeit des Kraftfahrzeugs (10) für mehr als eine vorbestimmte Mindestzeitdauer größer als ein vorbestimmter Schwellenwert ist.

8. Verfahren zum Betreiben einer Mobilfunkvorrichtung (15) für ein Kraftfahrzeug (10), wobei durch die Mobilfunkvorrichtung (15) eine Funkverbindung (12) zu einem Mobilfunknetzwerk (11) bereitgestellt wird und eine Steuereinrichtung (21) der Mobilfunkvorrichtung (15) über die Funkverbindung (12) in einem Basismodus (M1) Daten (13) mittels einer Basismodemschaltung (19) mit einer vorbestimmten Basisbitrate (B1) sendet und/oder empfängt,
**dadurch gekennzeichnet, dass**
die Steuereinrichtung (21) zumindest ein vorbestimmtes Wechselereignis (22) erkennt und bei erkanntem Wechselereignis (22) von dem Basismodus (M1) in einen Zusatzmodus (M2) wechselt, in welchem die Steuereinrichtung (21) Daten (13) über die Funkverbindung (12) mittels einer Zusatzmodemschaltung (19) mit einer Niedrigbitrate (B2), die kleiner als die Basisbitrate (B1) ist, sendet und/oder empfängt, wobei die Basismodemschaltung (19) und die Zusatzmodemschaltung (20) jeweils LTE-Modemschaltungen unterschiedlicher Performanzkategorie sind und hierbei die Performanzkategorie der Basismodemschaltung (19) größer als CAT-3 und die Performanzkategorie der Zusatzmodemschaltung (20) CAT-1 oder CAT-0 oder eine der Kategorien zur Unterstützung von Machine Type Communication ist, wobei
die Steuereinrichtung (21) als ein Wechselereignis (22) erkennt, dass das Kraftfahrzeug (10) geparkt ist, und dies an einem Zündung-aus-Signal erkennt, wobei nach dem Empfangen des Zündung-aus-Signals eine vorbestimmte Mindestzeitdauer ohne Zündungssignal erkannt werden muss, damit von dem Basismodus in den Zusatzmodus gewechselt wird.

## Claims

1. Mobile telephone device (15) for a motor vehicle (10), wherein the mobile telephone device (15) is configured to provide a telephone connection (12) to a mobile telephone network (11), and a control device (21) of the mobile telephone device (15) is configured to transmit and/or to receive data (13) by means of a basic modem circuit (19) via the telephone connection (12) in a basic mode (M1), which basic modem circuit provides a predetermined basic bit rate (B1),
**characterised in that**
an additional modem circuit (20) is provided which provides a low bit rate (B2), which is smaller than the basic bit rate (B1), for the transmission of data (13) via the telephone connection (12), wherein the control device (21) is configured to recognise at least one predetermined change event (22), and when a change event (22) is recognised to change from the basic mode (M1) to an additional mode (M2), in which the control device (21) transmits and/or receives data (13) by means of the additional modem circuit (20), wherein the basic modem circuit (19) and the additional modem circuit (20) are respectively LTE modem circuits of different performance categories and herewith the performance category of the basic modem circuit (19) is greater than CAT-3 and the performance category of the additional modem circuit (20) is CAT-1 or CAT-0 or one of the categories for the support of Machine Type Communication, wherein
the control device (21) is configured to recognise as a change event (22) that the motor vehicle (10) is parked, and to recognise this at an ignition-off-signal, wherein after the reception of the ignition-off-signal a predetermined minimum time duration without ignition signal must be recognised in order for a change to take place from the basic mode into the additional mode.

2. Mobile telephone device (15) according to claim 1, wherein an effective bandwidth of the additional modem circuit (20) is smaller than an effective bandwidth of the basic modem circuit (19).

3. Mobile telephone device (15) according to any of the preceding claims, wherein in the additional mode (M2) a frequency spreading is greater and/or a modulation method and/or a forward error correction and/or an ARQ protocol is different than in the basic mode (M1) and for this reason in additional mode (M2) a transmission range and/or power transmission balance is greater than in basic mode (M1).

4. Mobile telephone device (15) according to any of the preceding claims, wherein the control device (21) is configured to recognise as a change event (22) that a transmission of useful data (18) via the telephone connection (12) has not taken place for more than a predetermined minimum time duration.

5. Mobile telephone device (15) according to any of the preceding claims, wherein the control device (21) is configured to recognise as a change event (22) that an emergency call signal signals that an automatic emergency call should be transmitted via the telephone connection (12).

6. Mobile telephone device (15) according to any of the preceding claims, wherein the control device (21) is configured to recognise as a change event (22) that a connection error signal, which signals an interrupted telephone connection (12) or an unsuccessful call setup, fulfils a predetermined abort criterion.

7. Mobile telephone device (15) according to any of the preceding claims, wherein the control device (21) is configured to recognise as a change event (22) that a speed of travel of the motor vehicle (10) is greater than a predetermined threshold value for more than a predetermined minimum time duration.

8. Method for operating a mobile telephone device (15) for a motor vehicle (10), wherein a telephone connection (12) to a mobile telephone network (11) is prepared by the mobile telephone device (15) and a control device (21) of the mobile telephone device (15) transmits and/or receives, by means of a basic modem circuit (19) having a predetermined basic bit rate (B1), data (13) via the telephone connection (12) in a basic mode (M1),
**characterised in that**
the control device (21) recognises at least one predetermined change event (22), and when a change event (22) has been recognised switches from the basic mode (M1) into an additional mode (M2), in which the control device (21) transmits and/or receives data (13) via the telephone connection (12) by means of an additional modem circuit (19) having a low bit rate (B2), which is smaller than the basic bit rate (B1), wherein the basic modem circuit (19) and the additional modem circuit (20) are respectively LTE modem circuits of different performance categories and herewith the performance category of the basic modem circuit (19) is greater than CAT-3 and the performance category of the additional modem circuit (20) is CAT-1 or CAT-0 or one of the categories for the support of Machine Type Communication, wherein
the control device (21) recognises as a change event (22) that the motor vehicle (10) is parked and recognises this at an ignition-off-signal, wherein after the reception of the ignition-off-signal a predetermined minimum time duration without ignition signal must be recognised in order for a change to take place from the basic mode into the additional mode.

## Revendications

1. Dispositif de radiocommunication mobile (15) pour un véhicule automobile (10), dans lequel le dispositif de radiocommunication mobile (15) est aménagé afin de mettre à disposition une liaison radio (12) à un réseau de radiocommunication mobile (11), et un dispositif de commande (21) du dispositif de radiocommunication mobile (15) est aménagé afin d'émettre et/ou de recevoir par le biais de la liaison radio (12) dans un mode de base (M1) des données (13) au moyen d'un circuit de modem de base (19), qui met à disposition un débit binaire de base (B1) prédéterminé,
**caractérisé en ce que**
un circuit de modem supplémentaire (20) est prévu, lequel met à disposition pour la transmission de données (13) par le biais de la liaison radio (12) un débit binaire faible (B2) qui est inférieur au débit binaire de base (B1), dans lequel le dispositif de commande (21) est aménagé afin de détecter au moins un évènement de permutation (22) prédéterminé et en cas d'évènement de permutation (22) détecté de passer du mode de base (M1) à un mode supplémentaire (M2), dans lequel le dispositif de commande (21) émet et/ou reçoit des données (13) au moyen du circuit de modem supplémentaire (20), dans lequel le circuit de modem de base (19) et le circuit de modem supplémentaire (20) sont respectivement des circuits de modem LTE de différente catégorie de performance et en l'occurrence la catégorie de performance du circuit de modem de base (19) est plus grande que la CAT-3 et la catégorie de performance du circuit de modem supplémentaire (20) est CAT-1 ou CAT-0 ou une des catégories pour le soutien de communication de type machine, dans lequel
le dispositif de commande (21) est aménagé afin de détecter comme évènement de permutation (22) que le véhicule automobile (10) est stationné, et de le détecter en raison d'un signal d'arrêt d'allumage, dans lequel après la réception du signal d'arrêt d'allumage une durée minimale prédéterminée doit être détectée sans signal d'allumage afin de passer du mode de base au mode supplémentaire.

2. Dispositif de radiocommunication mobile (15) selon la revendication 1, dans lequel une largeur de bande utile du circuit de modem supplémentaire (20) est inférieure à une largeur de bande utile du circuit de modem de base (19).

3. Dispositif de radiocommunication mobile (15) selon l'une quelconque des revendications précédentes, dans lequel dans le mode supplémentaire (M2) un étalement de fréquence est plus grand et/ou un procédé de modulation et/ou une correction d'erreur sans voie de retour et/ou un protocole ARQ est autre que dans le mode de base (M1) et ainsi dans le mode supplémentaire (M2) une portée d'émetteur et/ou un bilan de transmission de puissance est plus grand que dans le mode de base (M1).

4. Dispositif de radiocommunication mobile (15) selon l'une quelconque des revendications précédentes, dans lequel le dispositif de commande (21) est aménagé afin de détecter comme évènement de permutation (22) qu'une transmission de données utiles (18) par le biais de la liaison radio (12) a fait défaut pour plus d'une durée minimale prédéterminée.

5. Dispositif de radiocommunication mobile (15) selon l'une quelconque des revendications précédentes, dans lequel le dispositif de commande (21) est aménagé afin de détecter comme évènement de permutation (22) qu'un signal d'appel d'urgence signale qu'un appel d'urgence automatique doit être émis par le biais de la liaison radio (12).

6. Dispositif de radiocommunication mobile (15) selon l'une quelconque des revendications précédentes, dans lequel le dispositif de commande (21) est aménagé afin de détecter comme évènement de permutation (22) qu'un signal d'erreur de liaison qui signale une liaison radio (12) interrompue ou un établissement de liaison infructueux, remplit un critère d'interruption prédéterminé.

7. Dispositif de radiocommunication mobile (15) selon l'une quelconque des revendications précédentes, dans lequel le dispositif de commande (21) est aménagé afin de détecter comme évènement de permutation (22) qu'une vitesse de roulement du véhicule automobile (10) pour plus d'une durée minimale prédéterminée est plus grande qu'une valeur seuil prédéterminée.

8. Procédé de fonctionnement d'un dispositif de radiocommunication mobile (15) pour un véhicule automobile (10), dans lequel une liaison radio (12) à un réseau de radiocommunication mobile (11) est mise à disposition par le dispositif de radiocommunication mobile (15) et un dispositif de commande (21) du dispositif de radiocommunication mobile (15) émet et/ou reçoit par le biais de la liaison radio (12) dans un mode de base (M1) des données (13) au moyen d'un circuit de modem de base (19) avec un débit binaire de base (B1) prédéterminé,
**caractérisé en ce que**
le dispositif de commande (21) détecte au moins un évènement de permutation (22) prédéterminé et en cas d'événement de permutation connu (22) passe du mode de base (M1) à un mode supplémentaire (M2), dans lequel le dispositif de commande (21) émet/ou reçoit des données (13) par le biais de la liaison radio (12) au moyen d'un circuit de modem supplémentaire (19) avec un débit binaire faible (B2) qui est inférieur au débit binaire de base (B1), dans lequel le circuit de modem de base (19) et le circuit de modem supplémentaire (20) sont respectivement des circuits de modem LTE de différente catégorie de performance et en l'occurrence la catégorie de performance du circuit de modem de base (19) est plus grande que la CAT-3 et la catégorie de performance du circuit de modem supplémentaire (20) est CAT-1 ou CAT-0 ou une des catégories pour le soutien de communication de type machine, dans lequel
le dispositif de commande (21) détecte comme évènement de permutation (22) que le véhicule automobile (10) est stationné, et le détecte en raison d'un signal d'arrêt d'allumage, dans lequel après la réception du signal d'arrêt d'allumage une durée minimale prédéterminée doit être détectée sans signal d'allumage afin de passer du mode de base au mode supplémentaire.
